# EUROPÄISCHE PATENTSCHRIFT

(11) **EP 2 049 871 B1**
(45) Veröffentlichungstag und Bekanntmachung des Hinweises auf die Patenterteilung: **14.08.2013**
(21) Anmeldenummer: 07729969.1
(22) Anmeldetag: 06.06.2007
(51) Int. Cl.: G01C 19/56, G01C 19/5747, G01C 19/5762

(54) **DREHRATENSENSOR**
ROTATION-RATE SENSOR
CAPTEUR DE VITESSE DE ROTATION

(30) Priorität: 31.07.2006 DE 102006035281; 05.10.2006 DE 102006047135
(43) Veröffentlichungstag der Anmeldung: 22.04.2009
(73) Patentinhaber: Robert Bosch GmbH, 70442 Stuttgart (DE)
(72) Erfinder: HAUER, Joerg, 72762 Reutlingen (DE); GOMEZ, Udo-Martin, 71229 Leonberg (DE); NEUL, Reinhard, 70567 Stuttgart (DE); KEHR, Kersten, 08267 Zwota (DE); CLASSEN, Johannes, 72764 Reutlingen (DE); FRANKE, Axel, 71254 Ditzingen (DE); QUANDER, Marco, 70839 Gerlingen (DE)
(86) Internationale Anmeldenummer: PCT/EP2007/055597
(87) Internationale Veröffentlichungsnummer: WO 2008/015044

(56) Entgegenhaltungen:
- EP-A1- 1 365 211
- EP-A2- 1 098 170
- WO-A1-02/066927
- DE-A1- 10 203 515
- US-B1- 6 349 597

## Beschreibung

### Stand der Technik

Die vorliegende Erfindung betrifft einen Drehratensensor gemäß dem Oberbegriff des Patentanspruchs 1.

Ein solcher Drehratensensor, der aus der DE 102 03 515 bekannt ist, weist ein Antriebsmassenelement, das über einer Oberfläche eines Substrats angeordnet ist und durch eine Antriebseinrichtung entlang einer ersten Achse, die parallel zu der Oberfläche verläuft, zu Schwingungen antreibbar ist, ein Erfassungsmassenelement, das entlang einer zweiten Achse, die senkrecht zur ersten Achse verläuft, unter Einwirkung einer Coriolis-Kraft auslenkbar ist, und eine Erfassungseinrichtung auf, durch welche die Auslenkung des Erfassungsmassenelements entlang der zweiten Achse erfaßbar ist.

Dabei wird die Coriolis-Kraft durch Federn von dem Antriebsmassenelement auf das Erfassungsmassenelement übertragen und verläuft auch die zweite Achse entlang der Oberfläche des Substrats. Der Drehratensensor ist somit nur zur Erfassung einer Coriolis-Kraft geeignet, die aufgrund einer Drehung um eine Achse senkrecht zur Oberfläche des Substrats entsteht. Zur Erfassung der Coriolis-Kraft sind an dem Erfassungsmassenelement mehrere Finger als Elektroden ausgebildet, die in entsprechende Finger eingreifen, die im Substrat ausgebildet sind. Die Veränderung der Kapazität zwischen den Fingern wird zur Bestimmung der Coriolis-Kraft verwendet.

Die Druckschrift EP 1365 211 A1 zeigt einen Drehratensensor mit zwei gekoppelten Antriebselementen und mit zwei Erfassungselementen. Die Druckschrift US 6,349,597 B1 zeigt einen Drehratensensor mit zwei Antriebselementen und zwei Coriolis-Massen. Die Druckschrift

WO 02/066927 A1 offenbart einen Drehratensensor mit einem Antrieb in der Ebene des Substrats und einer Messauslenkung in der Ebene des Substrats, sowie eine Koppelfeder zwischen zwei Erfassungselementen.

### Offenbarung der Erfindung

Der vorliegenden Erfindung liegt die Aufgabe zugrunde, einen Drehratensensor zu schaffen, der eingerichtet ist, eine Coriolis-Kraft, die senkrecht zu dem Substrat gerichtet ist, und damit eine entsprechende Drehung um eine Achse, die entlang der Oberfläche des Substrats verläuft, zu erfassen.

Die der Erfindung zugrunde liegende Aufgabe wird durch einen Drehratensensor mit den Merkmalen des kennzeichnenden Teils des Patentanspruchs 1 gelöst.

Erfindungsgemäß verläuft die zweite Achse senkrecht zur Oberfläche.

Vorteilhafterweise kann ein Drehratensensor mit Bezug auf die Richtung der Drehachse ungewohnten Abmessungen geschaffen werden. Der Drehratensensor kann dann insbesondere in einem Fahrzeug platzsparend integriert werden. Der Drehratensensor kann auch zusammen mit weiteren Drehratensensoren, die zur Erfassung von Drehungen um anders gerichtete Drehachsen geeignet sind, auf einem Chip integriert werden. Der erfindungsgemäße Drehratensensor ist außerdem für hohe Arbeitsfrequenzen ausgelegt, so daß der Einfluß von Störbeschleunigungen verringert wird. Statt eines Antriebsmassenelements können auch zwei oder mehrere Antriebsmassenelemente vorgesehen sein. Statt einer Antriebseinrichtung können auch zwei oder mehrere Antriebseinrichtungen vorgesehen sein.

Erfindungsgemäß sind ein weiteres Antriebsmassenelement, das über der Oberfläche angeordnet und durch eine weitere Antriebseinrichtung entlang der ersten Achse antreibbar ist, ein weiteres Erfassungsmassenelement, das entlang der zweiten Achse, die senkrecht zur Oberfläche verläuft, unter Einwirkung der Coriolis-Kraft auslenkbar ist, und eine weitere Erfassungseinrichtung vorgesehen, durch welche die Auslenkung des weiteren Erfassungsmassenelements entlang der zweiten Achse erfaßbar ist.

Vorteilhafterweise läßt sich so ein besonders sensitiver Drehratensensor schaffen. Statt eines weiteren Antriebsmassenelements können auch zwei oder mehrere weitere Antriebsmassenelemente vorgesehen sein. Statt einer weiteren Antriebseinrichtung können auch zwei oder mehrere weitere Antriebseinrichtungen vorgesehen sein. Auch die folgenden Ausführungsformen und Weiterbildungen dienen einer weiteren Erhöhung der Sensitivität.

In einer weiteren bevorzugten Ausführungsform ist das Antriebsmassenelement durch mindestens eine Antriebsmassenfeder mit dem Substrat verbunden, die so eingerichtet ist, daß Schwingungen des Antriebsmassenelements in jeder Richtung senkrecht zur ersten Achse unterdrückt werden, und ist das weitere Antriebsmassenelement durch mindestens eine weitere Antriebsmassenfeder mit dem Substrat verbunden, die so eingerichtet ist, daß Schwingungen des weiteren Antriebsmassenelements in jeder Richtung senkrecht zur ersten Achse unterdrückt werden.

In einer Weiterbildung der bevorzugten Ausführungsformen ist das Antriebsmassenelement mit dem Erfassungsmassenelement durch mindestens eine Erfassungsmassenfeder verbunden, die so eingerichtet ist, daß Schwingungen des Erfassungsmassenelements relativ zu dem Antriebsmassenelement in jeder Richtung senkrecht zur zweiten Achse unterdrückt werden, und ist das weitere Antriebsmassenelement mit dem weiteren Erfassungsmassenelement durch mindestens eine weitere Erfassungsmassenfeder verbunden, die so eingerichtet ist, daß Schwingungen des weiteren Erfassungsmassenelements relativ zu dem weiteren Antriebsmassenelement in jeder Richtung senkrecht zur zweiten Achse unterdrückt werden.

In noch einer Weiterbildung der bevorzugten Ausführungsformen sind ein Schwingmassenelement und ein weiteres Schwingmassenelement vorgesehen, ist das Antriebsmassenelement mit dem Schwingmassenelement durch mindestens eine Schwingmassenfeder verbunden, ist das weitere Antriebsmassenelement mit dem weiteren Schwingmassenelement durch mindestens eine weitere Schwingmassenfeder verbunden, ist das Schwingmassenelement mit dem Erfassungsmassenelement durch mindestens eine Erfassungsmassenfeder verbunden ist, und ist das weitere Schwingmassenelement mit dem weiteren Erfassungsmassenelement durch mindestens eine weitere Erfassungsmassenfeder verbunden ist.

Vorteilhafterweise wird dann ausschließlich die Coriolis-Kraft auf die Erfassungsmassenelemente übertragen werden, während die Erfassungsmassenelemente entlang der Oberfläche des Substrats ruhen. Vorzugsweise sind das Schwingmassenelement und das weitere Schwingmassenelement durch mindestens eine Kopplungsfeder miteinander gekoppelt und fallen in Ruhelage die Schwerpunkte des Antriebsmassenelements, des Schwingelements, des Erfassungsmassenelements, des weiteren Antriebsmassenelements, des weiteren Schwingelements und des weiteren Erfassungsmassenelements zusammen.

Erfindungsgemäß sind das Erfassungsmassenelement und das weitere Erfassungsmassenelement durch mindestens eine Kopplungsfeder miteinander gekoppelt.

In noch einer Weiterbildung der bevorzugten Ausführungsformen sind das Antriebsmassenelement und das weitere Antriebsmassenelement durch mindestens eine Kopplungsfeder miteinander gekoppelt.

In noch einer bevorzugten Ausführungsform fallen in Ruhelage die Schwerpunkte der Antriebsmassenelemente und der Erfassungsmassenelemente zusammen. Vorteilhafterweise wird dadurch eine Verfälschung der Meßergebnisse durch eine Drehbeschleunigung um die zweite Achse vermieden werden. Die Störempfindlichkeit und Querempfindlichkeit wird somit stark verbessert.

### Kurze Beschreibung der Zeichnungen

Im folgenden wird die Erfindung mit Bezugnahme auf die Zeichnungen näher beschrieben. Es zeigen:
FIG. 1 eine Ansicht eines Drehratensensors; und
FIG. 2 eine Ansicht eines weiteren Drehratensensors.

### Ausführungsformen der Erfindung

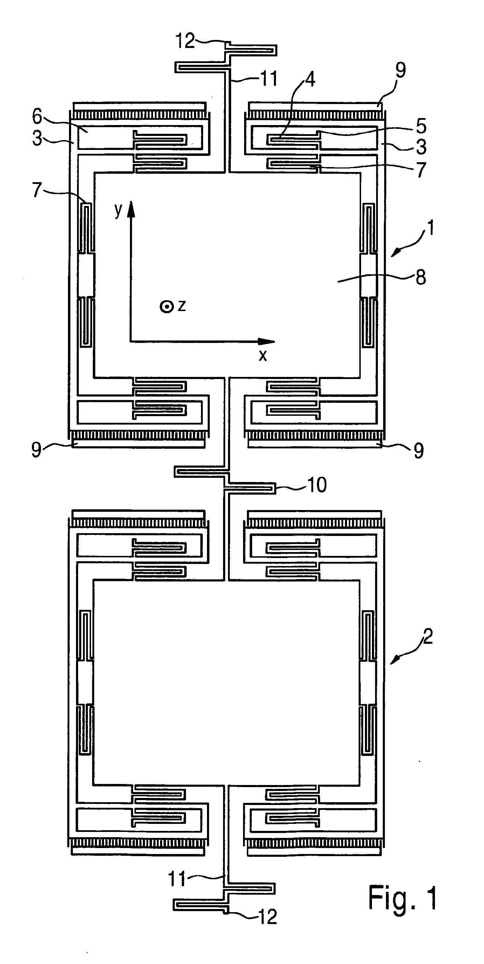

Fig. 1 zeigt eine Ansicht eines Drehratensensors. Der Drehratensensor umfaßt zwei identische Strukturen 1, 2 mit einer konstanten Dicke, die über einem Substrat, welches in der Papierebene verläuft, angeordnet ist. Die Strukturen 1, 2 werden beispielsweise erzeugt, indem eine Polysiliziumschicht auf einer Oxidschicht abgeschieden wird, die wiederum auf einem Siliziumsubstrat vorgesehen ist. In der Oxidschicht sind Aussparungen ausgebildet, so daß in diesen Aussparungen Verbindungen von der Polysiliziumschicht zu dem Siliziumsubstrat entstehen. Die Strukturen werden daraufhin definiert und die Oxidschicht in einem Ätzprozeß entfernt. Die Polysiliziumschicht bleibt dabei mit dem Siliziumsubstrat verbunden.

Jede der Strukturen 1, 2 weist zwei Antriebsmassenelemente 3 auf. Die Antriebsmassenelemente 3 sind über vier Antriebsmassenfedern 4 an den Enden 5 der Antriebsmassenfedern 4 mit dem darunterliegenden Substrat verbunden. Dabei liegen jeweils zwei Antriebsmassenfedern 4, die das gleiche Antriebsmassenelement 3 mit dem darunterliegenden Substrat verbinden, in einer y-Richtung, die entlang der Oberfläche des Substrats verläuft, gegenüber. Die Lage des Antriebsmassenelements 3 ist somit zwischen zwei Enden 5 relativ zu dem darunterliegenden Substrat in y-Richtung begrenzt. Die Antriebsmassenfedern 4 sind jeweils in einer viereckigen Aussparung 6 in einem der Antriebmassenelemente 3 angeordnet. Die Antriebsmassenfedern 4 sind wegen der Ausrichtung ihrer Faltungen vor allem in y-Richtung dehnbar, während Schwingungen der Antriebsmassenelemente 3 in x-Richtung unterdrückt werden. Aufgrund der Anbringung der Antriebsmassenfedern 4 in den Aussparungen 6 ist dabei noch genügend Raum auf den Seiten der Antriebsmassenelemente 3 vorhanden, um Kammantriebe 9 anzuordnen, mit denen die Antriebsmassenelemente 3 in y-Richtungen in Schwingungen versetzt werden können.

Die zwei Antriebsmassenelemente 3 einer jeden Struktur 1, 2 sind über acht Erfassungsmassenfedern 7 mit einem rechteckigen Erfassungsmassenelement 8 (zwei auf jeder Seite) verbunden. Das Erfassungselement 8 kann mit durchgehenden Löchern (z.B. Perforation) versehen sein. Die zwei Antriebsmassenelemente 3 umgeben das Erfassungsmassenelement 8 fast vollständig, lassen jedoch Raum, um eine Kopplungsfeder 10 und eine Substratfeder 11 an das Erfassungsmassenelement 8 anzubinden. Jeweils zwei der Erfassungsmassenfedern 7 sind gegenüberliegend auf zwei Seiten des Erfassungsmassenelements 8 angebracht. Durch die Ausbildung und diese Anbringung der Erfassungsmassenfedern 7 werden Schwingungen des Erfassungsmassenelements 8 zu den Antriebselementen 3 in y-Richtung und in x-Richtung unterdrückt, während eine Relativbewegung des Erfassungsmassenelements 8 in einer z-Richtung senkrecht zur Oberfläche leicht möglich ist.

Die Erfassungsmassenelemente 8 sind über die Kopplungsfeder 10 miteinander gekoppelt. Die Erfassungsmassenelemente 8 sind zur Stabilisierung über Substratfedern 11 an den Enden 12 der Substratfedern 11 mit dem darunterliegenden Substrat verbunden.

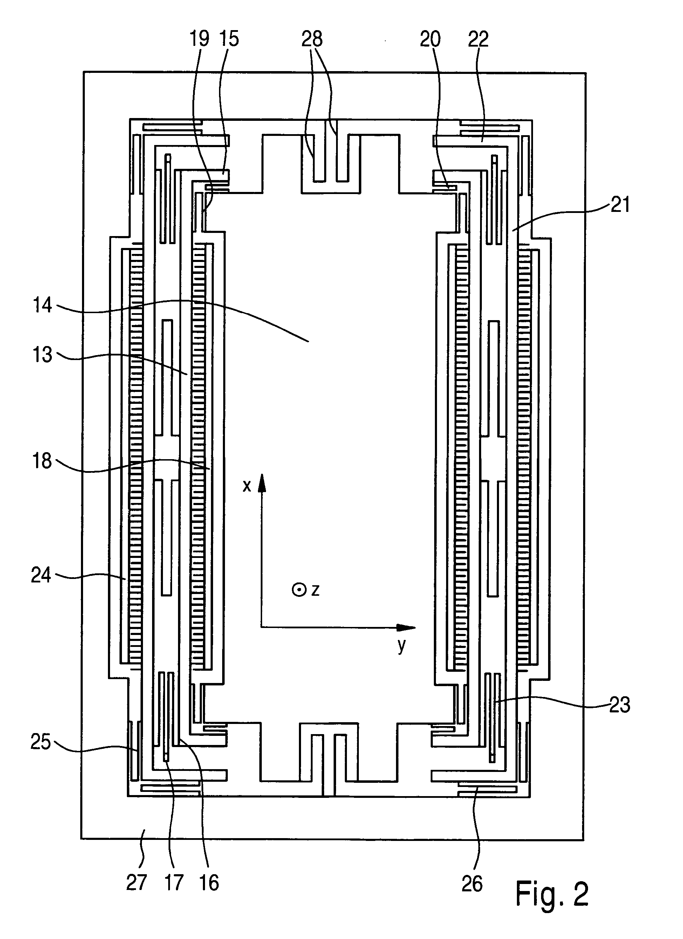

Fig. 2 zeigt eine Ansicht eines weiteren Drehratensensors, der mit dem gleichen Verfahren hergestellt werden kann wie der vorher beschriebene Drehratensensor. Der weitere Drehratensensor hat in wesentlichen auch die gleiche Funktionsweise. In Fig. 2 sind sämtliche Federn zur Vereinfachung als Linien dargestellt.

Zwei Antriebsmassenelemente 13 sind auf zwei gegenüberliegenden Seiten eines Erfassungsmassenelements 14, das eine im wesentlichen rechteckige Form hat, angeordnet. Die zwei Antriebsmassenelemente 13 weisen an ihren beiden gegenüberliegenden Enden jeweils einen seitlich hervorstehenden Vorsprung 15 auf, so daß das Erfassungsmassenelement 14 klammerartig von den Antriebsmassenelementen 13 eingeschlossen wird.

Die zwei Antriebsmassenelemente 13 sind auf einer Seite jeweils über zwei Antriebsmassenfedern 16 mit einem darunterliegenden Substrat an deren Enden 17 verbunden. Auf den gegenüberliegenden Seiten greifen an den Antriebsmassenelementen 13 ausgebildete Finger in die Finger von Kammantrieben 18 ein. Aufgrund dieser Anordnung und der Ausbildung der Antriebsmassenfedern 16 werden Schwingungen in x-Richtung unterdrückt, während sich Schwingungen in y-Richtung senkrecht zu der x-Richtung entlang der Oberfläche des Substrats leicht ausbilden können.

Die zwei Antriebsmassenelemente 13 sind über acht Erfassungsmassenfedern 19, 20 mit dem Erfassungsmassenelement 14 verbunden. Jeweils zwei der Erfassungsmassenfedern 19, 20 sind gegenüberliegend auf zwei Seiten des Erfassungsmassenelements 14 angebracht. Dabei dienen die Vorsprünge 15 zur Positionierung der Erfassungsmassenfedern 20. Durch die Ausbildung und diese Anbringung der Erfassungsmassenfedern 19, 20 werden Schwingungen des Erfassungsmassenelements 14 zu den Antriebselementen 13 in y-Richtung und in x-Richtung unterdrückt, während eine Relativbewegung des Erfassungsmassenelements 14 in einer z-Richtung senkrecht zur Oberfläche leicht möglich ist.

Ein weiteres Antriebsmassenelemente 21 ist jeweils parallel außerhalb eines der Antriebsmassenelemente 13 angeordnet. Die zwei Antriebsmassenelemente 21 weisen an ihren beiden gegenüberliegenden Enden jeweils einen seitlich hervorstehenden Vorsprung 22 auf, so daß die Antriebsmassenelemente 13 klammerartig von den weiteren Antriebsmassenelementen 21 eingeschlossen sind. Die zwei weiteren Antriebsmassenelemente 21 sind auf einer Seite jeweils über weitere Antriebsmassenfedern 23 an deren Enden 17, die sie mit den Antriebsmassenfedern 17 teilen, mit dem darunterliegenden Substrat verbunden. Auf den gegenüberliegenden Seiten greifen an den weiteren Antriebsmassenelementen 21 ausgebildete Finger in die Finger von Kammantrieben 24 ein. Aufgrund dieser Anordnung und der Ausbildung der Antiebsmassenfedern 23 werden Schwingungen in x-Richtung unterdrückt, während sich Schwingungen in x-Richtung senkrecht zu der y-Richtung entlang der Oberfläche des Substrats leicht ausbilden können.

Die zwei weiteren Antriebsmassenelemente 21 sind über acht Erfassungsmassenfedern 25, 26 mit einem weiteren Erfassungsmassenelement 27 verbunden, die im wesentlichen als Rechteck mit einer rechteckigen Aussparung ausgebildet ist. In der Aussparung sind das Erfassungsmassenelement 14, die Antriebselemente 13 und die Antriebselemente 21 angeordnet. Diese Struktur mit dem weiteren Erfassungsmassenelement 27 als umschließendem Rahmen führt zu einer hohen Stabilität. Jeweils zwei der Erfassungsmassenfedern 25, 26 sind gegenüberliegend auf zwei Seiten des Erfassungsmassenelements 27 angebracht. Dabei dienen die Vorsprünge 22 zur Positionierung der Erfassungsmassenfedern 26. Durch die Ausbildung und diese Anbringung der Erfassungsmassenfedern 25, 26 werden Schwingungen des Erfassungsmassenelements 27 zu den Antriebsmassenelementen 21 in y-Richtung und in x-Richtung unterdrückt, während eine Relativbewegung des Erfassungsmassenelements 27 in der z-Richtung senkrecht zur Oberfläche leicht möglich ist.

Die Erfassungsmassenelemente 14, 27 sind durch die Kopplungsfedern 28 miteinander gekoppelt. Die Antriebsmassenelemente sind über die Kopplungsfedern 29 miteinander gekoppelt.

Aufgrund des symmetrischen Aufbaus des weiteren Drehratensensors fallen in Ruhelage die Schwerpunkte der Antriebsmassenelemente 13, des Erfassungsmassenelements 14, der weiteren Antriebsmassenelemente 21 und des weiteren Erfassungsmassenelements 27 zusammen, so daß eine Verfälschung der Meßergebnisse durch eine Drehbeschleunigung um die zweite Achse vermieden wird.

Die Ausbildung der Antriebsmassenelemente und Erfassungsmassenelemente aus Polysilizium führt dazu, daß sie, wie für die Auswertung erforderlich, elektrisch leitend sind. Insbesondere die Anzahl der Federn und Antriebsmassenelemente und Kammantriebe ist willkürlich. Die Anzahl der Faltungen der Federn ist beliebig. Die Federn sind bevorzugt gleich dick ausgebildet, um die Unempfindlichkeit gegenüber Herstellungstoleranzen zu erhöhen. Von großer Bedeutung ist hingegen, wie die Antriebsmassenelemente und die Erfassungsmassenelemente relativ zueinander und zum Substrat bewegbar sind. Die Erfassungsmassenelemente können jeweils auch vollständig von einem Antriebsmassenelement umgeben sein, wobei die beiden Antriebsmassenelemente durch eine Kopplungsfeder miteinander gekoppelt sind. Die umgekehrte Anordnung der Erfassungsmassenelemente und Antriebsmassenelemente ist ebenfalls möglich. Eine solche Rahmenstruktur der Antriebsmassenelemente und der Erfassungsmassenelemente erhöht die Stabilität.

Zur Erfassung einer Drehung um die x-Achse werden die Antriebsmassenelemente für alle Ausführungsformen durch die Kammantriebe zu Schwingungen entlang der y-Achse angeregt. Die Coriolis-Kraft ist dann in z-Richtung senkrecht zu der Oberfläche des Substrats gerichtet. Dabei wird die Frequenz der Kammantriebe vorzugsweise so gewählt, daß die Erfassungsmassenelemente aufgrund der Kopplung zu gegenphasigen Schwingungen angeregt werden. Unter den Erfassungsmassenelementen ist jeweils im Substrat eine Elektrode als Erfassungseinrichtung ausgebildet. Werden die Erfassungsmassenelemente durch die Coriolis-Kraft in z-Richtung in Schwingungen versetzt, verändern sich die Kapazitäten zwischen den Elektroden zu den darüberliegenden Erfassungsmassenelementen. Durch Differenzbildung der Signale von den Elektroden können Störbeschleunigungen einfach abgezogen werden. Zudem wird durch geeignete Dimensionierung der Antriebsmassenelemente und Erfassungsmassenelemente dafür gesorgt, daß ihr gemeinsamer Schwerpunkt zeitinvariant ist.

Zwischen den Antriebsmassenelementen und den Erfassungsmassenelementen können auch weitere Schwingmassenelemente vorgesehen sein, die miteinander gekoppelt sind. So ist es möglich nur die Schwingung in z-Richtung aufgrund der Coriolis-Kraft auf die Erfassungsmassenelemente zu übertragen.

## Patentansprüche

1. Drehratensensor mit einem Antriebsmassenelement (3, 13), das über einer Oberfläche eines Substrats angeordnet ist und durch eine Antriebseinrichtung (9, 18) entlang einer ersten Achse (y), die entlang der Oberfläche verläuft, zu Schwingungen antreibbar ist, einem Erfassungsmassenelement (8, 14), das entlang einer zweiten Achse (z) unter Einwirkung einer Coriolis-Kraft auslenkbar ist, und einer Erfassungseinrichtung, durch welche die Auslenkung des Erfassungsmassenelements (8, 14) entlang der zweiten Achse (z) erfaßbar ist, wobei die zweite Achse (z) senkrecht zur Oberfläche verläuft, wobei ein weiteres Antriebsmassenelement (3, 21), das über der Oberfläche angeordnet ist und durch eine weitere Antriebseinrichtung (9, 24) entlang der ersten Achse (y) antreibbar ist, und ein weiteres Erfassungsmassenelement (8, 27), das entlang der zweiten Achse, die senkrecht zur Oberfläche verläuft, unter Einwirkung der Coriolis-Kraft auslenkbar ist, und eine weitere Erfassungseinrichtung vorgesehen sind, durch welche die Auslenkung des weiteren Erfassungsmassenelements (8, 27) entlang der zweiten Achse (z) erfaßbar ist,
**dadurch gekennzeichnet, dass**
das Erfassungsmassenelement (8, 14) und das weitere Erfassungsmassenelement (8, 27) durch mindestens eine Kopplungsfeder (10, 28) miteinander gekoppelt sind.

2. Drehratensensor nach Anspruch 1, **dadurch gekennzeichnet, dass** das Antriebsmassenelement (3, 13) durch mindestens eine Antriebsmassenfeder (4, 16) mit dem Substrat verbunden ist, die so eingerichtet ist, dass Schwingungen des Antriebsmassenelements in jeder Richtung senkrecht zur ersten Achse unterdrückt werden, und dass das weitere Antriebsmassenelement (3, 13) durch mindestens eine weitere Antriebsmassenfeder (4, 23) mit dem Substrat verbunden ist, die so eingerichtet ist, dass Schwingungen des weiteren Antriebsmassenelements (3, 13) in jeder Richtung senkrecht zur ersten Achse unterdrückt werden.

3. Drehratensensor nach Anspruch 1 oder Anspruch 2, **dadurch gekennzeichnet, dass** das Antriebsmassenelement (3, 13) mit dem Erfassungsmassenelement (8, 14) durch mindestens eine Erfassungsmassenfeder (7,19, 20) verbunden ist, die so eingerichtet ist, dass Schwingungen des Erfassungsmassenelements relativ zu dem Antriebsmassenelement (3, 13) in jeder Richtung senkrecht zur zweiten Achse (z) unterdrückt werden, und dass das weitere Antriebsmassenelement (3, 21) mit dem weiteren Erfassungsmassenelement (8, 27) durch mindestens eine weitere Erfassungsmassenfeder (7, 25, 26) verbunden ist, die so eingerichtet ist, dass Schwingungen des weiteren Erfassungsmassenelements (8, 27) relativ zu dem weiteren Antriebsmassenelement in jeder Richtung senkrecht zur zweiten Achse (z) unterdrückt werden.

4. Drehratensensor nach Anspruch 1 oder Anspruch 2, **dadurch gekennzeichnet, dass** ein Schwingmassenelement und ein weiteres Schwingmassenelement vorgesehen sind, dass das Antriebsmassenelement mit dem Schwingmassenelement durch mindestens eine Schwingmassenfeder verbunden ist, dass das weitere Antriebsmassenelement mit dem weiteren Schwingmassenelement durch mindestens eine weitere Schwingmassenfeder verbunden ist, dass das Schwingmassenelement mit dem Erfassungsmassenelement durch mindestens eine Erfassungsmassenfeder verbunden ist, und dass das weitere Schwingmassenelement mit dem weiteren Erfassungsmassenelement durch mindestens eine weitere Erfassungsmassenfeder verbunden ist.

5. Drehratensensor nach Anspruch 4, **dadurch gekennzeichnet, dass** das Schwingmassenelement und das weitere Schwingmassenelement durch mindestens eine Kopplungsfeder miteinander gekoppelt sind.

6. Drehratensensor nach Anspruch 5, **dadurch gekennzeichnet, dass** in Ruhelage die Schwerpunkte des Antriebsmassenelements, des Schwingmassenelements, des Erfassungsmassenelements, des weiteren Antriebsmassenelements, des weiteren Schwingmassenelements und des weiteren Erfassungsmassenelements zusammenfallen.

7. Drehratensensor nach Anspruch 1, **dadurch gekennzeichnet, dass** in Ruhelage die Schwerpunkte der Antriebsmassenelemente (13, 21) und der Erfassungsmassenelemente (14, 27) zusammenfallen.

## Claims

1. Rotational speed sensor having a drive mass element (3, 13) which is arranged over a surface of a substrate and can be driven to vibrate by a drive device (9, 18) along a first axis (y), which runs along the surface, a detection mass element (8, 14), which can be deflected along a second axis (z) under the influence of a Coriolis force, and a detection device by means of which the deflection of the detection mass element (8, 14) along the second axis (z) can be detected, the second axis (z) running perpendicular to the surface, there being provided a further drive mass element (3, 21), which is arranged over the surface and can be driven along the first axis (y) by a further drive device (9, 24), and a further detection mass element (8, 27), which can be deflected along the second axis, which runs perpendicular to the surface, under the influence of the Coriolis force, and a further detection device, by means of which the deflection of the further detection mass element (8, 27) along the second axis (z) can be detected, **characterized in that** the detection mass element (8, 14) and the further detection mass element (8, 27) are coupled to one another by at least one coupling spring (10, 28).

2. Rotational speed sensor according to Claim 1, **characterized in that** the drive mass element (3, 13) is connected to the substrate by at least one drive mass spring (4, 16) which is set up such that vibrations of the drive mass element are suppressed in any direction perpendicular to the first axis, and **in that** the further drive mass element (3, 13) is connected to the substrate by at least one further drive mass spring (4, 23), which is set up such that vibrations of the further drive mass element (3, 13) are suppressed in any direction perpendicular to the first axis.

3. Rotational speed sensor according to Claim 1 or Claim 2, **characterized in that** the drive mass element (3, 13) is connected to the detection mass element (8, 14) by at least one detection mass spring (7, 19, 20), which is set up such that vibrations of the detection mass element relative to the drive mass element (3, 13) are suppressed in any direction perpendicular to the second axis (z), and **in that** the further drive mass element (3, 21) is connected to the further detection mass element (8, 27) by at least one further detection mass spring (7, 25, 26), which is set up such that vibrations of the further detection mass element (8, 27) relative to the further drive mass element are suppressed in any direction perpendicular to the second axis (z).

4. Rotational speed sensor according to Claim 1 or Claim 2, **characterized in that** a vibration mass element and a further vibration mass element are provided, **in that** the drive mass element is connected to the vibration mass element by at least one vibration mass spring, **in that** the further drive mass element is connected to the further vibration mass element by at least one further vibration mass spring, **in that** the vibration mass element is connected to the detection mass element by at least one detection mass spring, and **in that** the further vibration mass element is connected to the further detection mass element by at least one further detection mass spring.

5. Rotational speed sensor according to Claim 4, **characterized in that** the vibration mass element and the further vibration mass element are coupled to one another by at least one coupling spring.

6. Rotational speed sensor according to Claim 5, **characterized in that** in the rest position the centres of gravity of the drive mass element, the vibration mass element, the detection mass element, the further drive mass element, the further vibration mass element and the further detection mass element coincide.

7. Rotational speed sensor according to Claim 1, **characterized in that** in the rest position the centres of gravity of the drive mass elements (13, 21) and of the detection mass elements (14, 27) coincide.

## Revendications

1. Sonde de vitesse de rotation dotée d'un élément (3, 13) de masse d'entraînement disposé au-dessus d'une surface d'un substrat et apte à être mise en vibration par un dispositif d'entraînement (9, 18) le long d'un premier axe (y) qui s'étend le long de la surface, d'un élément (8, 14) de masse de détection qui peut être déplacé le long d'un deuxième axe (z) sous l'effet de la force de Coriolis et d'un dispositif de détection par lequel le déplacement de l'élément (8, 14) de masse de détection le long du deuxième axe (z) peut être saisi, le deuxième axe (z) étant perpendiculaire à la surface, d'un autre élément (3, 21) de masse d'entraînement disposé au-dessus de la surface et apte à être entraîné le long du premier axe (y) par un autre dispositif d'entraînement (9, 24), d'un autre élément (8, 27) de masse de détection apte à être déplacé le long du deuxième axe perpendiculaire à la surface sous l'action de la force de Coriolis et d'un autre dispositif de détection par lequel le déplacement de l'autre élément (8, 27) de masse de détection le long du deuxième axe (z) peut être détecté,
**caractérisée en ce que**
l'élément (8, 14) de masse de détection et l'autre élément (8, 27) de masse de détection peuvent être accouplés l'un à l'autre au moyen d'au moins un ressort d'accouplement (10, 28).

2. Sonde de vitesse de rotation selon la revendication 1, **caractérisée en ce que** l'élément (3, 13) de masse d'entraînement est relié au substrat par au moins un ressort (4, 16) de masse d'entraînement conçu pour atténuer les vibrations de l'élément de masse d'entraînement dans toute direction perpendiculaire au premier axe et **en ce que** l'autre élément (3, 13) de masse d'entraînement est relié au substrat par au moins un autre ressort (4, 23) de masse d'entraînement conçu pour atténuer les vibrations de l'autre élément (3, 13) de masse d'entraînement dans toute direction perpendiculaire au premier axe.

3. Sonde de vitesse de rotation selon la revendication 1 ou la revendication 2, **caractérisée en ce que** l'élément (3, 13) de masse d'entraînement est relié à l'élément (8, 14) de masse de détection par au moins un ressort (7, 19, 20) de masse de détection conçu pour atténuer les vibrations de l'élément de masse de détection par rapport à l'élément (3, 13) de masse d'entraînement dans toute direction perpendiculaire au deuxième axe (z) et **en ce que** l'autre élément (3, 21) de masse d'entraînement est relié à l'autre élément (8, 27) de masse de détection par au moins un autre ressort (7, 25, 26) de masse de détection conçu pour atténuer les vibrations de l'autre élément (8, 27) de masse de détection par rapport à l'autre élément de masse d'entraînement dans toute direction perpendiculaire au deuxième axe (z).

4. Sonde de vitesse de rotation selon la revendication 1 ou la revendication 2, **caractérisée en ce qu'**un élément de masse oscillante et un autre élément de masse oscillante sont prévus, **en ce que** l'élément de masse d'entraînement est relié à l'élément de masse oscillante par au moins un ressort de massé oscillante, **en ce que** l'autre élément de masse d'entraînement est relié à l'autre élément de masse oscillante par au moins un autre ressort de masse oscillante, **en ce que** l'élément de masse oscillante est relié à l'élément de masse de détection par au moins un ressort de masse de détection et **en ce que** l'autre élément de masse oscillante est relié à l'autre élément de masse de détection par au moins un autre ressort de masse de détection.

5. Sonde de vitesse de rotation selon la revendication 4, **caractérisée en ce que** l'élément de masse oscillante et l'autre élément de masse oscillante peuvent être accouplés l'un à l'autre par au moins un ressort d'accouplement.

6. Sonde de vitesse de rotation selon la revendication 5, **caractérisée en ce qu'**en position de repos, les centres de masse de l'élément de masse d'entraînement, de l'élément de masse oscillante, de l'élément de masse de détection, de l'autre élément de masse d'entraînement, de l'autre élément de masse oscillante et de l'autre élément de masse de détection coïncident.

7. Sonde de vitesse de rotation selon la revendication 1, **caractérisée en ce qu'**en position de repos, les centres de masse des éléments de masse d'entraînement (13, 21) et des éléments (14, 27) de masse de détection coïncident.
